# EUROPÄISCHE PATENTSCHRIFT

(11) **EP 0 425 726 B1**
(45) Veröffentlichungstag und Bekanntmachung des Hinweises auf die Patenterteilung: **12.05.1993**
(21) Anmeldenummer: 89120259.0
(22) Anmeldetag: 02.11.1989
(51) Int. Cl.: G01D 5/38

(54) **Positionsmesseinrichtung**
Position measuring device
Dispositif de mesure de position

(43) Veröffentlichungstag der Anmeldung: 08.05.1991
(73) Patentinhaber: Dr. Johannes Heidenhain GmbH, D-83292 Traunreut (DE)
(72) Erfinder: Spies, Alfons, Dipl.-Ing., D-8221 Seebruck (DE); Teimel, Arnold, Dipl.-Ing., D-8221 Waging am See (DE)

(56) Entgegenhaltungen:
- EP-A- 0 262 349
- EP-A- 0 330 810
- GB-A- 2 185 314
- US-A- 4 629 886
- DESIGN ENGINEERING, Februar 1989, Seiten 14-15, London, GB; CANON: "Linear encoder matches resolution of laser interferometer"
- PHILIPS TECHNISCH TIJDSCHRIFT, Band 30, Nr. 6/7, 1969, Seiten 153-164; H. DE LANG et al.: "Nauwkeurige digitale verplaatsingsmetingen met optische middelen. I. Verplaatsingsmeting met een reflecterend fazeraster. II. Interferometrische verplaatsingsmeting met een laser"

## Beschreibung

Die Erfindung bezieht sich auf eine Vorrichtung zum Messen der Relativlage zweier Objekte gemäß dem Oberbegriff des Anspruches 1.

Positionsmeßeinrichtungen sind in vielfältiger Bauweise bekannt. Als Beispiel sei die EP-B1-163362 angeführt. Dort ist eine Vorrichtung beschrieben, die nach dem sogenannten Dreigitter-Meßprinzip arbeitet. Dort ist das Maßstabgitter reflektierend ausgebildet und das Referenzgitter weist ausgewählte Charakteristika auf, die die Phasenlage der Beugungsordnungen zueinander beeinflussen.

In der Dissertation "Photoelektrische Messung der Änderung von Längen- oder Winkelpositionen mit Hilfe von Beugungsgittern" von F. Hock, Universität Stuttgart 1975, ist auf den Seiten 130 und 131 die Rückmischung zweier kohärenter Teilstrahlen an einem laminaren Phasengitter dargestellt (Abb. 55) und beschrieben. Das Meßgitter ist dort jedoch nicht dargestellt. Das Phasengitter ist so ausgebildet, daß die 0. und geradzahlige Beugungsordnungen eliminiert werden.

In der DE-OS 37 00 906 ist eine interferentiell arbeitende Positionsmeßeinrichtung dargestellt, bei der die Phasenverschiebungen der Meßsignale durch polarisationsoptische Elemente erzeugt werden, die im Strahlengang der Teilstrahlenbündel liegen.

Demgegenüber liegt der Erfindung die Aufgabe zugrunde, eine Vorrichtung zu schaffen, die einfach aufgebaut ist und unter Verzicht auf polarisationsoptische Mittel wenigstens zwei zueinander phasenverschobene Signale liefert.

Diese Aufgabe wird durch eine Vorrichtung mit den Merkmalen des Anspruchs 1 gelöst.

Die Vorteile der Erfindung liegen darin, daß die Vorrichtung mit nur einem Beugungsgitter ausgestattet werden muß und ohne polarisationsoptische Bauelemente auskommt, was den Aufbau stark vereinfacht und die Kosten vorteilhaft beeinflußt. Ferner erzielt man Abtastsignale deren Periode ein Viertel der Maßstabs-Periode beträgt.

Merkmale, die die erfindungsgemäße Vorrichtung vorteilhaft ausgestalten entnimmt man den abhängigen Ansprüchen.

Anhand der in den Figuren dargestellten Ausführungsbeispiele wird die Erfindung noch näher erläutert.

Es zeigt
- Figur 1: den schematischen Aufbau einer Meßvorrichtung für zwei phasenverschobene Meßsignale;
- Figur 2: eine Meßvorrichtung für drei phasenverschobene Meßsignale;
- Figur 3: eine Meßvorrichtung mit nicht senkrecht einfallendem Beleuchtungsstrahlenbündel;
- Figur 4A: eine Meßvorrichtung mit Reflexionsspiegeln;
- Figur 4B: eine Seitenansicht der Meßvorrichtung gemäß Figur 4A;
- Figur 5: eine Variante der Meßvorrichtung gemäß Figur 3 mit Tripelspiegeln;
- Figur 6A: eine Auflicht-Meßvorrichtung mit Reflexionsspiegeln;
- Figur 6B: eine Seitenansicht der Meßvorrichtung gemäß Figur 6A;
- Figur 7A: eine Auflicht-Meßanordnung mit Tripelspiegeln;
- Figur 7B: eine Seitenansicht der Meßvorrichtung gemäß Figur 7A;
- Figur 8: eine Meßvorrichtung zur Winkelmessung mit Durchmesserabtastung und
- Figur 9: eine Variante einer Durchmesserabtastvorrichtung.

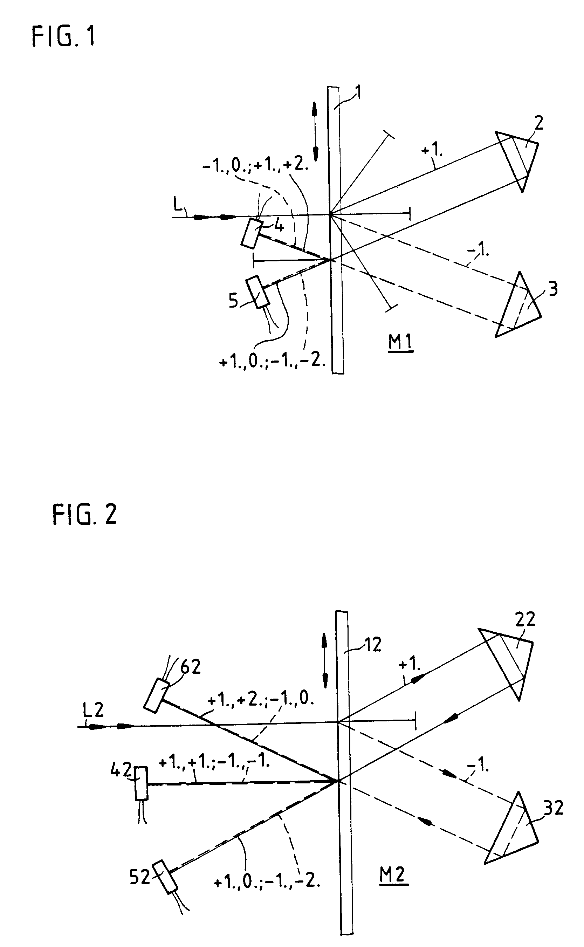

Eine in Figur 1 gezeigte Meßvorrichtung M1 weist ein Phasengitter 1 auf, an dem ein senkrecht einfallendes Lichtbündel L in seine ± 1. Beugungsordnungen abgebeugt wird. Andere Beugungsordnungen werden eliminiert. Die Teilstrahlenbündel der ± 1. Beugungsordnungen treffen auf retroreflektierende Elemente in Form von Tripelspiegeln 2 und 3. Die Tripelspiegel 2 und 3 werfen die Teilstrahlenbündel der ± 1. Beugungsordnungen parallel zu sich selbst auf das Phasengitter 1 zurück. Dort werden sie erneut gebeugt und es interferieren nach dem zweiten Durchgang durch das Phasengitter 1 folgende Beugungsordnungen miteinander:
Die -1. Ordnung der ersten Beugung und die 0. Ordnung der zweiten Beugung mit der +1. Ordnung der ersten Beugung und der +2. Ordnung der zweiten Beugung, sowie die +1. Ordnung der ersten Beugung und die 0. Ordnung der zweiten Beugung mit der -1. Ordnung der ersten Beugung und der -2. Ordnung der zweiten Beugung.

Es treten Zweistrahlinterferenzen auf, deren Intensitäten bei Bewegung des Phasengitters 1 moduliert werden und die durch die Einbeziehung der 0. Beugungsordnung beim zweiten Durchgang durch das Phasengitter 1 zueinander phasenverschoben sind.

Diese Phasenschiebungen sind abhängig von den Charakteristika des Phasengitters. Sie können durch ein von 1:1 abweichendes Verhältnis von Strich-zu-Lückenbreite und durch Differenzen im Brechungsindex der Phasenschichten und/oder ihre Dicke variiert werden.

Von Detektoren 4 und 5 werden die Intensitätsmodulationen in zueinander phasenverschobene elektrische Signale umgewandelt.

Das anhand von Figur 1 erläuterte Grundprinzip zieht sich durch alle Ausführungsbeispiele, so daß hier zur Straffung nur die der jeweiligen Figur zugrundeliegenden Variationen erläutert werden.

In Figur 2 werden bei ähnlichem Aufbau drei zueinander phasenverschobene Signale erzeugt, indem nach dem zweiten Durchgang durch das Phasengitter 12 in drei Richtungen Zweistrahlinterferenzen auftreten und von drei Detektoren 42, 52, 62 in drei zueinander phasenverschobene elektrische Signale umgewandelt werden. Die interferierenden Strahlen werden in Richtung ihres Detektors angegeben, es interferiert
in Richtung des Detektors 42:
ein Strahl der Beugungsordnungen +1., +1. mit einem zweiten Strahl der Beugungsordnungen -1., -1.;
in Richtung des Detektors 52:
ein Strahl der Beugungsordnungen -1., -2. mit einem zweiten Strahl der Beugungsordnungen +1., 0. und
in Richtung des Detektors 62:
ein Strahl der Beugungsordnungen +1., +2. mit einem zweiten Strahl der Beugungsordnungen -1., 0..

Die Phasenschiebung zwischen den Signalen beträgt in diesem Fall 120°.

Zu beachten ist auch in diesem Fall, daß beim ersten Durchtritt durch das Phasengitter 12 (Aufspaltungsgitter) die 0., ±2., und die höheren Beugungsordnungen absorbiert oder ausgeblendet werden, und erst beim zweiten Durchgang durch das Phasengitter 12 (Vereinigungsgitter) werden die 0. und die höheren Beugungsordnungen bei der Bildung der interferierenden Teilstrahlenbündel wieder mit einbezogen.

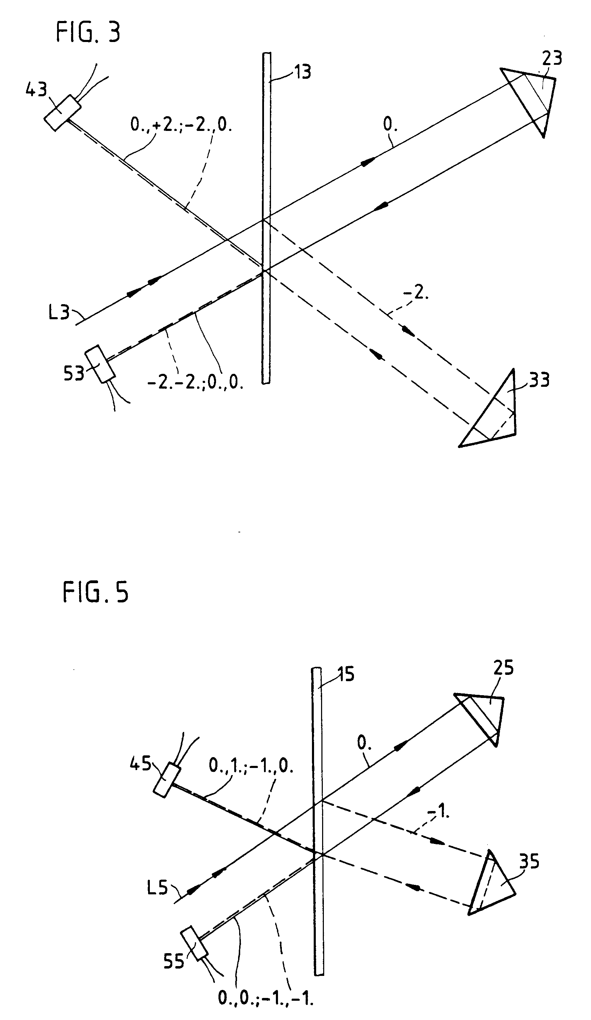

In der in Figur 3 dargestellten Variante wird das Phasengitter 13 unter einem Winkel beleuchtet, der von 90° abweicht. Hier wird die -1. Beugungsordnung beim ersten Durchgang durch das Phasengitter 13 ausgeblendet, und die 0. sowie die -2. Beugungsordnung werden Tripelspiegeln 23 und 33 zugeführt, die sie wieder auf das Phasengitter 13 zurückwerfen. Nach erneuter Beugung interferieren nun
in Richtung des Detektors 43:
ein Strahl der Beugungsordnungen 0., +2. mit einem zweiten Strahl der Beugungsordnungen -2., 0. und
in Richtung des Detektors 53:
ein Strahl der Beugungsordnungen -2., -2. mit einem zweiten Strahl der Beugungsordnungen 0., 0..

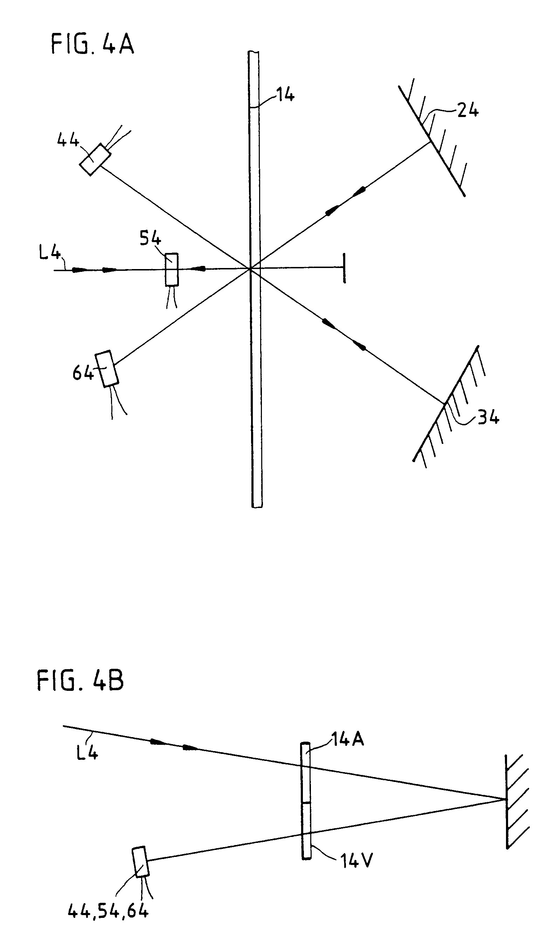

In Figur 4A ist eine Variante mit Reflexionsspiegeln 24 und 34 gezeigt, bei der das Beleuchtungsstrahlenbündel 24 wiederum senkrecht zur Meßrichtung auf das Phasengitter 14 auftritt und dort in Teilstrahlenbündel aufgespalten wird.

Figur 4B zeigt hingegen, daß in dieser Ansicht das Beleuchtungsstrahlenbündel unter einem von der Normalen abweichenden Winkel auf einen Teil 14A des Phasengitters 14 auftrifft, und durch die Reflexionsspiegel 24, 34 auf einen anderen Teil 14V trifft, wobei die gebeugten Teilstrahlenbündel nochmals gebeugt werden und auch wieder miteinander interferieren.

Bei dieser Anordnung können die Teilbereiche des Phasengitters jeweils für die Aufspaltung des Beleuchtungsstrahlenganges und für die Vereinigung der gebeugten Teilstrahlenbündel bezüglich der zu erzeugenden Beugungsordnungen der Teilstrahlenbündel jeweils optimiert werden. Die interferierenden Teilstrahlenbündel werden in analoger Weise zu den vorbeschriebenen Ausführungsbeispielen gebildet.

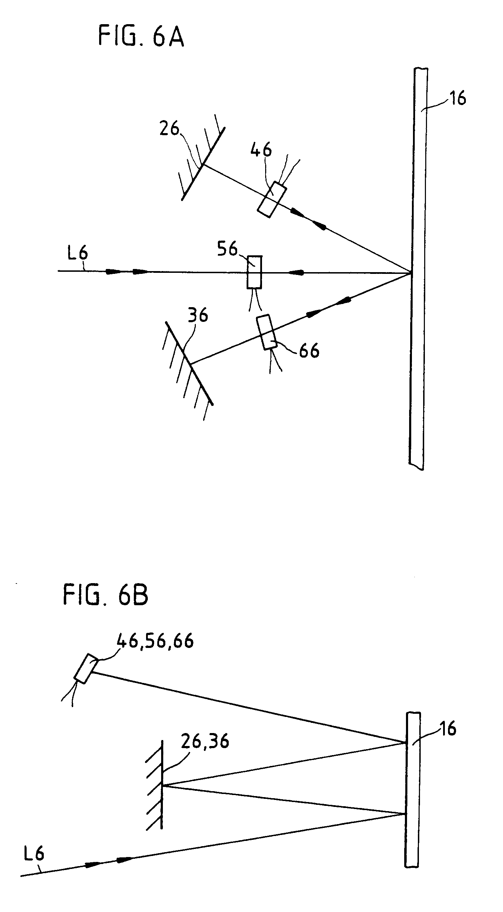

In Figur 5 ist eine Variante der Ausführungsform gemäß Figur 3 skizziert, bei der die 0. und ±1. Beugungsordnungen verwendet werden. Diese Anordnung liefert eine Signalperiode die 1/2 der Gitterperiode beträgt. Die resultierenden Zweistrahlinterferenzen ergeben sich aus der Analogie zu den vorstehend beschriebenen Beispielen.

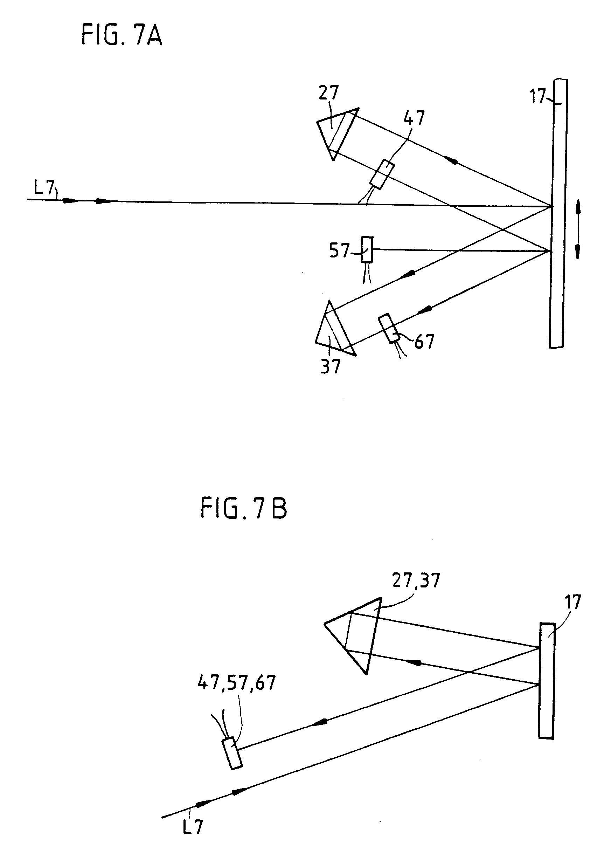

Bei den Ausführungsformen gemäß der Figuren 6A, 6B; 7A, 7B sind die Beispiele aus den Figuren 2; 4A, 4B in Varianten als Auflichtversionen dargestellt. Die Beleuchtung, die Reflexionselemente 26, 36; 27, 37 sowie die Detektoren 46, 56, 66; 47, 57, 67 sind alle auf derselben Seite des Phasengitters 16; 17 angeordnet, was im Gegensatz zu den ersten Beispielen dem sogenannten Auflichtprinzip entspricht.

Da die bauliche Ausgestaltung auf die bei Auflichtgeräten übliche Variationen gegenüber den Durchlichtgeräten abgestimmt ist, braucht hierzu nicht näher Stellung genommen werden.

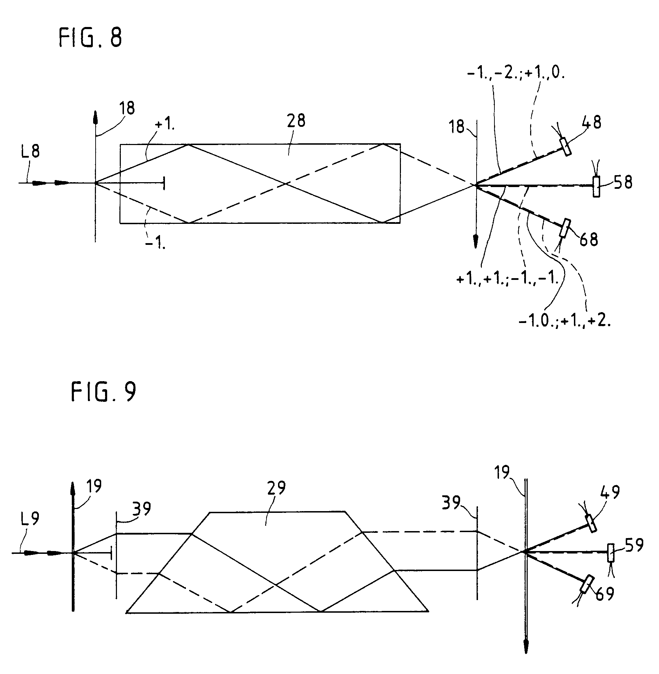

Ähnlich verhält es sich bei den Ausführungsbeispielen gemäß der Figuren 8 und 9. Hier wird ein an sich bekanntes Abtastprinzip der sogenannten Durchmesserabtastung mit der Erfindung in besonders vorteilhafter Weise verknüpft.

Ein Beispiel für die Durchmesserabtastung findet sich in der DE-PS-36 33 574.

Als Meßgitter dient ein Zylindermantel, auf den in bekannter Weise ein Phasengitter 18 mit den für die Erfindung erforderlichen physikalischen Eigenschaften aufgebracht ist.

Beim ersten Durchgang durch das Phasengitter 18 wird das einfallende Lichtbündel L8 wieder gebeugt, Teilstrahlenbündel der ±1. Ordnung werden erzeugt und treten in ein Umlenkprisma 28 ein, in welchem sie zweimal umgelenkt werden.

Unter dem gleichen Winkel, unter dem sie in das Umlenkprisma 28 eingetreten sind, treten sie wieder aus und durchsetzen das Phasengitter 18 zum zweiten Mal, und zwar diametral gegenüber dem ersten Gitterdurchgang. Nachdem die Teilstrahlenbündel in der bereits beschriebenen Art und Weise nochmals gebeugt werden, interferieren sie wieder und treffen als Zweistrahlinterferenzen folgender Kombinationen auf Detektoren 48, 58, 68, und zwar interferieren
in Richtung Detektor 48:
ein Strahl der Beugungsordnungen -1., -2. mit einem zweiten Strahl der Beugungsordnungen +1., 0.;
in Richtung des Detektors 58:
ein Strahl der Beugungsordnungen +1., +1. mit einem zweiten Strahl der Beugungsordnungen -1., -1. und
in Richtung des Detektors 68:
ein Strahl der Beugungsordnungen -1., 0. mit einem zweiten Strahl der Beugungsordnungen +1., +2..

Das Ausführungsbeispiel gemäß Figur 9 entspricht im Kern dem der Figur 8. Die Umlenkung der gebeugten Teilstrahlenbündel ± 1. Ordnung erfolgt hier jedoch mittels eines sogenannten "Dove"-Prismas 29, dem Umlenkgitter 39 vor- bzw. nachgeschaltet sind. Der Verlauf der gebeugten Teilstrahlenbündel ist aus Figur 9 ersichtlich und die interferierenden Teilstrahlenbündel entsprechen den in Figur 8 gezeigten Zweistrahlinterferenzen. Diese werden in bekannter Weise von Detektoren 49, 59 und 69 in zueinander phasenverschobene Signale umgewandelt.

Die Lichtquelle kann durch einen HeNe-Gaslaser, einen Halbleiter-Laser mit einer Kollimationsoptik, eine Lumineszenzdiode mit Kollimationsoptik oder dergleichen gebildet werden.

## Patentansprüche

1. Vorrichtung zum Messen der Relativlage zweier Objekte mit wenigstens einer Beleuchtungs- und einer Detektoreinrichtung (4, 5) die einem der Objekte zugeordnet sind, sowie wenigstens mit einer als Beugungsgitter ausgebildeten Meßteilung (1) am anderen Objekt, bei der ein Strahlenbündel an der Meßteilung gebeugt und in interferenzfähige Teilstrahlenbündel (+1, -1) aufgespalten wird, wobei die gebeugten Teilstrahlenbündel von optischen Elementen (2, 3) auf die Meßteilung (1) umgelenkt, erneut gebeugt und paarweise zur Interferenz gebracht werden, wobei Intensitätsmodulationen dieser Zweistrahlinterferenzen durch die Detektoreinrichtung (4, 5) in elektrische Signale umgewandelt werden, dadurch gekennzeichnet, daß die physikalischen Eigenschaften der als Phasengitter ausgebildeten Meßteilung (1) so gewählt sind, daß zumindest bei der Bildung einer der Zweistrahlinterferenzen wenigstens ein Teilstrahlenbündel der 0. Beugungsordnung beteiligt ist, und daß die bei einer Bewegung der Meßteilung (1) in Meßrichtung entstehenden Intensitätsmodulationen der Zweistrahlinterferenzen zueinander phasenverschoben sind.

2. Vorrichtung nach Anspruch 1, dadurch gekennzeichnet, daß die optischen Elemente retroreflektierende Elemente (2, 3) wie Tripelprismen, Tripelspiegel, Katzenaugen oder dgl. sind.

3. Vorrichtung nach Anspruch 1, dadurch gekennzeichnet, daß die optischen Elemente Planspiegel (24, 34) sind.

4. Vorrichtung nach Anspruch 1, dadurch gekennzeichnet, daß bei einer Winkelmeßeinrichtung die optischen Elemente Umlenkprismen (28) sind.

5. Vorrichtung nach Anspruch 1, dadurch gekennzeichnet, daß bei einer Winkelmeßeinrichtung die optischen Elemente durch ein Dove-Prisma (29) gebildet werden, dem je ein Umlenkgitter (39) vor- und nachgeschaltet ist.

6. Vorrichtung nach Anspruch 1, dadurch gekennzeichnet, daß die Detektoreinrichtung wenigstens zwei Photoelemente (4, 5, 6) aufweist, die wenigstens zwei Zweistrahlinterferenzen in zwei zueinander phasenverschobene elektrische Signale umwandeln.

7. Vorrichtung nach Anspruch 1, dadurch gekennzeichnet, daß als Beugungsgitter eine einzige Meßteilung (1) vorgesehen ist, an der die Strahlenbündel zweimal gebeugt werden.

8. Vorrichtung nach Anspruch 1, dadurch gekennzeichnet, daß Teilbereiche des Phasengitters jeweils für die Aufspaltung (14A) und für die Vereinigung (14V) der Strahlenbündel unterschiedliche physikalische Eigenschaften aufweisen.

9. Vorrichtung nach Anspruch 1 und 6, dadurch gekennzeichnet, daß die interferierenden Beugungsordnungen so gewählt sind, daß die Periode der elektrischen Signale 1/4 der Teilungsperiode der Meßteilung (1) beträgt.

10. Vorrichtung nach Anspruch 1 und 6, dadurch gekennzeichnet, daß die interferierenden Beugungsordnungen so gewählt sind, daß die Periode der elektrischen Signale 1/2 der Teilungsperiode der Meßteilung (1) beträgt.

## Claims

1. Device for measuring the relative position of two objects, with at least one illumination and one detector installation (4, 5) associated with one of the objects, and at least with one measurement division (1) in the form of a diffraction grid on the other object, in which a ray beam is diffracted on the measurement division and is split up into partial beams (+1, -1) capable of interference, the diffracted partial beams are deflected on to the measurement division (1) by optical members (2, 3), are again diffracted and caused to interfere in pairs, modulations in intensity of these two-beam interferences being converted into electrical signals by the detector installation (4, 5), characterised in that the physical properties of the measurement division (1) in the form of a phase grid are so selected that, at least during the formation of one of the two-beam interferences, at least one partial beam is associated with the O. order of diffraction, and in that the modulations in intensity arising in the direction of measurement of the two-beam interferences during a movement of the measurement division (1) are offset in phase with respect to one another.

2. Device according to claim 1, characterised in that the optical members are retroreflecting members (2, 3) such as triple prisms, triple reflectors, cat's eyes or the like.

3. Device according to claim 1, characterised in that the optical members are plane reflectors (24, 34).

4. Device according to claim 1, characterised in that, in the case of an angular measuring installation, the optical members are deflecting prisms (28).

5. Device according to claim 1, characterised in that, in the case of an angular measuring installation, the optical members are in the form of a Dove prism (29), before and after which there is incorporated a deflecting grid (39).

6. Device according to claim 1, characterised in that the detector installation has at least two photoelectric members (4, 5, 6), which convert at least two two-beam interferences into two electrical signals, offset in phase to one another.

7. Device according to claim 1, characterised in that there is provided as a diffraction grid one single measurement division (1), on which the ray beams are diffracted twice.

8. Device according to claim 1, characterised in that partial areas of the phase grid have different respective physical properties for splitting (14A) and for unification (14V) of the ray beams.

9. Device according to claim 1 and 6, characterised in that the interfering orders of diffraction are so selected that the period of the electrical signals is ¼ of the division period of the measurement division (1).

10. Device according to claim 1 and 6, characterised in that the interfering orders of diffraction are so selected that the period of the electrical signals is ½ of the division period of the measurement division (1).

## Revendications

1. Dispositif de mesure de la position relative de deux objets, comportant au moins un dispositif d'éclairage et un dispositif de détection (4, 5) associés à l'un des objets et au moins une graduation de mesure (1) agencée sous forme de réseau de diffraction, associée à l'autre objet, dispositif dans lequel un faisceau de rayons est diffracté par la graduation de mesure et est divisé en faisceaux partiels (+1, -1) pouvant être amenés en interférence, les faisceaux partiels diffractés étant déviés vers la graduation de mesure (1) par des éléments optiques (2, 3), de nouveau diffractés et amenés en interférence par paires, les modulations d'intensité de ces interférences à deux rayons étant transformées en signaux électriques par le dispositif de détection (4, 5), caractérisé par le fait que les propriétés physiques de la graduation de mesure (1) réalisée sous forme de réseau de phase sont choisies telles qu'au moins un faisceau partiel, d'ordre de diffraction 0., participe au moins à la formation de l'une des interférences à deux rayons et par le fait que, lors d'un déplacement de la graduation de mesure (1) dans la direction de mesure, les modulations d'intensité des interférences à deux rayons soient mutuellement déphasées.

2. Dispositif selon la revendication 1, caractérisé par le fait que les éléments optiques sont des éléments rétro-réfléchissant (2, 3), tels que des prismes triples, des miroirs triples, des catadioptres ou analogues.

3. Dispositif selon la revendication 1, caractérisé par le fait que les éléments optiques sont des miroirs plans (24, 34).

4. Dispositif selon la revendication 1, caractérisé par le fait que, dans un dispositif de mesure d'angles, les éléments optiques sont des prismes déviateurs (28).

5. Dispositif selon la revendication 1, caractérisé par le fait que, dans un dispositif de mesure d'angles, les éléments optiques sont formés par un prisme de Dove (29) devant lequel et derrière lequel est placé un réseau de déviation (39).

6. Dispositif selon la revendication 1, caractérisé par le fait que le dispositif de détection comporte au moins deux cellules photoélectriques (4, 5, 6) qui transforment au moins deux interférences à deux rayons en deux signaux électriques mutuellement déphasés.

7. Dispositif selon la revendication 1, caractérisé par le fait qu'il est prévu, comme réseau de diffraction, une graduation de mesure (1) unique sur laquelle les faisceaux de rayons sont diffractés à deux reprises.

8. Dispositif selon la revendication 1, caractérisé par le fait que les zones du réseau de phase présentent des propriétés physiques différentes pour la séparation (14A) et la fusion (14V) des faisceaux de rayons.

9. Dispositif selon les revendications 1 et 6, caractérisé par le fait que les ordres de diffraction amenés en interférence sont choisis de manière telle que la période des signaux électriques représente 1/4 de la période de graduation de la graduation de mesure (1).

10. Dispositif selon les revendications 1 et 6, caractérisé par le fait que les ordres de diffraction amenés en interférence sont choisis de manière telle que la période des signaux électriques représente 1/2 de la période de graduation de la graduation de mesure (1).
